(19) Europäisches Patentamt

European Patent Office

Office européen des brevets

(11) **EP 1 617 204 A1**

(12) **EUROPEAN PATENT APPLICATION**
published in accordance with Art. 158(3) EPC

(43) Date of publication:
**18.01.2006 Bulletin 2006/03**

(51) Int Cl.:
***G01N 21/64*** (1980.01)

(21) Application number: **03717709.4**

(22) Date of filing: **23.04.2003**

(86) International application number:
**PCT/JP2003/005190**

(87) International publication number:
**WO 2004/095008 (04.11.2004 Gazette 2004/45)**

(84) Designated Contracting States:
**DE FR GB**

(71) Applicant: **Olympus Corporation**
**Tokyo 151-0072 (JP)**

(72) Inventors:
• **KOBAYASHI, Sayoko**
**Hachioji-shi, Tokyo 192-0045 (JP)**

• **KATO, Noriko**
**Hachioji-shi, Tokyo 192-0046 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **METHOD FOR ANALYZING MOLECULAR FLUORESCENCE USING EVANESCENT ILLUMINATION**

(57)    The present invention relates to a method for analyzing the behavior and states of molecules present in an interface region, and an apparatus for performing the method.

FIG.2

EP 1 617 204 A1

## Description

Technical Field

The present invention relates to a method for analyzing the behavior and the states of molecules present in an interface region and an apparatus for practicing the method.

Background Art

In the studies of functional analysis of proteins, analysis of gene sequences encoding proteins have conventionally been a main subject of research. However, a rapid progress of human genome analysis in recent years shifts emphasis on analyzing how proteins synthesized from genes within cells behave and act.

For example, in living organisms, various gene expressions and signal transductions cause constant changing of various molecules having specific functions, including functional proteins such as enzymes and receptors, proteins to maintain cell structures, and biological active molecules such as lipids, glycoproteins and ions, thereby maintaining the biological mechanisms. In order to observe these biological functions and analyze them, it is required to observe, on the molecular level, the behavior of proteins which sterically maintains their functions.

Until now, fluorescent labeling methods have been used generally to observe the movement of target proteins. The methods comprise non-specific adsorption of fluorescent substances, such as fluorescein isothiocyanate (hereinafter referred to as FITC) and Alexa, onto the target proteins. However, when analyzing the interaction between the proteins and other substances, such as reactions between receptors and ligands or between antigens and antibodies, proper evaluation is difficult due to instability of their conformations.

To eliminate these problems, new technologies for analyzing biological molecules have been developed. They include, for example, a method to prepare labeled target proteins, using green fluorescent protein (hereinafter referred to as GFP) as a labeling substance, wherein those labeled proteins are obtained by expression of fusion proteins in cells transfected with vectors which are inserted with a gene encoding the target protein and a gene coding GFP. This technology has the following advantages: GFP, a labeling substance, has no biotoxicity because it is a biomolecule derived from Aequorea coerulescens (Brandt); it is possible to observe behavior of the target proteins while maintaining physiologically relevant conformations, because GFP can be attached to a protein terminus.

As an example of such procedures that enable to analyze the dynamics of labeled proteins located in vivo with maintaining their physiological features, a method using Fluorescence Correlation Spectroscopy (hereinafter referred to as FCS) has been reported (Proc. Natl. Acad. Sci. USA Vol. 96, pp. 10123-10128, 1999). This method analyzes dynamics of labeled target proteins by using autocorrelation functions, based on detected intensity of fluorescence from the fluorescent label which is excited by irradiation with light focused through a pinhole and further through an objective lens, using laser as a light source.

However, the measured area in observation using such confocal laser illumination would extend to the area with about 400 nm in radius and about 2 $\mu$m in height. Therefore, when general cells are observed by this method, for example, the analysis would be performed under the complicated condition with mixed information about nucleus, cytoplasm and even organelles. Thus, such method is not suitable for tracking the detailed movement of the target proteins.

Discussing one report, for example, observing behavior of Epidermal Growth Factor (hereinafter referred to as EGFR) existing in interface regions on cell membranes using such a FCS technique (Cytometry, vol. 35, pp. 353-362, 1992) reveals the following problems. First, fluorescent substances present in target illuminated regions will be photobleached due to excessive intensity of light energy from confocal laser illumination depending on a certain kinds of laser. Secondly, there is a wide variation in diffusion time of EGFR-GFP (100-1000 $\mu$s). Thirdly, there is high background noise due to autofluorescence generated from nuclei, cytoplasm and organelles in the observed area. Lastly, cytotoxicity by laser illumination is severe.

Disclosure of Invention

According to one embodiment of the present invention, the present invention provides a method for analyzing the behavior and states of molecules which is present in interface regions, and an apparatus to perform the method.

Brief Description of Drawings

FIG. 1 shows a block diagram illustrating an illuminating system which can be used in one embodiment of the present invention.

FIG. 2 shows a schematic diagram illustrating an illuminating system which can be used in one embodiment of the present invention.

FIG. 3 shows a block diagram illustrating an optical system which can be used in one embodiment of the present invention.

FIG. 4 shows a schematic diagram illustrating an optical system which can be used in one embodiment of the present invention.

FIG. 5 shows a schematic diagram illustrating an illuminating system which can be used in one embodiment of the present invention.

FIG. 6 shows a schematic diagram illustrating total reflection observed at a glass boundary phase of the illuminating system shown in FIG. 5.

FIG. 7 shows a schematic diagram illustrating an example of Fluorescence Correlation Analytical Apparatus constituting one embodiment of the present invention.

FIGS. 8A and 8B show schematic diagrams illustrating a difference of the illuminated area between evanescent illumination and confocal illumination.

FIG. 9 shows a graph illustrating FCS analysis data on membrane receptors obtained from the experiment with evanescent illumination.

FIG. 10 shows a graph illustrating FCS analytical data on membrane receptors obtained from the experiment with confocal illumination.

Best Mode for Carrying Out the Invention

According to one aspect of the present invention, illumination of a specimen with evanescent illumination allows the illuminated area to be restricted within about 200 nm in depth (i.e., Z-axis direction) from the total reflection surface from which evanescent illumination is generated. This enables to excite fluorescent substances localized in the illuminated area in the specimen, and detect the fluorescence intensity generated. Utilization of the analysis method with such evanescent illumination and FCS makes it possible to perform more precise analysis of the behavior and states of labeled target substances, in particular, those localized on cell membranes and around them.

The term "molecular fluorescence analysis", as used herein, refers to such techniques to analyze data obtained from the measurement of fluorescent signals (e.g., fluctuation movement and/or fluorescence intensity) derived from fluorescent molecules coming in and going out of a micro area (e.g., a confocal area). Related molecular fluorescence analyses include, other than FCS mentioned above, Fluorescence Intensity Distribution Analysis (FIDA) and Fluorescence Intensity Multiple Distribution Analysis (FIMDA) and the like (see Japanese Patent Publication Nos. (Tokuhyo) 2001-502062, 2001-509255, 2001-518307 and 2002-505742). Using these methods, it is possible to detect a change in fluorescence signals emitted from fluorescence labeled substances to analyze the behavior and states of molecules. In other words, one can analyze single molecule behavior of said target substances based on fluctuation of fluorescence, and a change in the states of the target substances at the single molecule level, based on a change in fluorescence intensity.

The term "specimen", as used herein, refers to a sample that contains target substances to be analyzed, which are placed on about 0.17 mm thick of a glass plate suitable for optical observation, such as a cover glass. The samples which may be contained in the specimen to be observed may be cells or histological sections derived from living organisms, or alternatively, may be the solutions containing target substances.

The term "target substance", as used herein, refers to a substance to be analyzed for their behavior and/or states. For example, when cells or histological sections are used as samples, functional proteins, such as enzymes and receptors, proteins maintaining the cell structure, biologically active molecules, such as lipids, glycoproteins and ions, and the target substances said samples can contain may be biological associated substances or various substances that can show activity in vivo, such as substances that can bind to membrane receptors. Additionally, target substances may be resin beads, and also may be some kinds of substances which size is below about 0.2 $\mu$m. Furthermore, the target substances may also include the substances secreted from cells, provided that those substances are imported into cells or exported from cells via any receptors, channels and exchangers.

Addition of a fluorescent substance to a target substance may be performed by binding any of known fluorescent substance per se to the target substance either chemically or biochemically, or may be carried out through a biotechnical procedure to express the fluorescenct substance in sample cells into which genes encoding fluorescent proteins are introduced.

EXAMPLES

1. Evanescent illumination

Conventionally, some means to irradiate a specimen with evanescent illumination are known. Now, two examples of the illumination means, i.e., those means using a prism and an objective lens, are explained below.

(1) Example of evanescent illumination using a prism

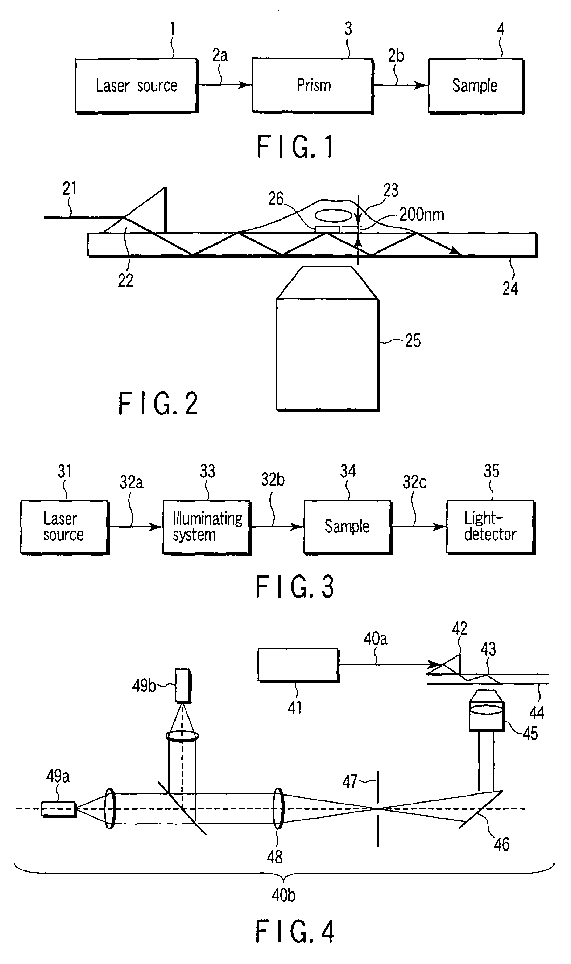

FIG. 1 illustrates an example of illumination systems where evanescent illumination is performed with a prism.
Evanescent illumination via a prism can be applied with at least the laser 1 and the prism 2. The illumination system constituted as follows is a novel prism-type illuminating means reported by the inventors for the first time.
As shown in FIG. 1, an illumination system, according to one aspect of the present invention, comprises laser source 1, light path 2a through which a laser beam emitted from said laser source 1 passes, prism 3 to refract a laser beam passing through said light path 2a, light path 2b to give rise to total reflection of a laser beam refracted by said prism 3, by means of an internal interface present therein and, and sample 4 to be excited with evanescent illumination generated from total reflection of a laser beam at said light path 2b.
In this system, said light path 2b preferably has the internal interface, functions as the means to undergo said total reflection of a laser beam irradiated to the interface as well as the means to support said sample 4. Such light path 2b is preferably a glass plate having optical properties suitable for microscopic observation, such as a cover glass.
An example of the above illumination system is additionally described as shown in FIG. 2. In this example, the target substances localized to membrane are measured using adhesive cells 23 as a sample. Culturing said adhesive cells 23 on cover glass 24 allows the cells to adhere on the surface of cover glass 24. Then, prism 22 is set on the same side of the sample placed. Objective lens 25, which is used as an optical receiving system, is set on the opposite side of adhesive cells 23 with a cover glass 24 between them. Laser 21 emitted from the laser source in a direction parallel to the sample-mounting surface of cover glass 24 is refracted with prism 22, and passes through the inside of cover glass 24 repeating the total reflection at the interface. This repeating of total reflection generates the evanescent field, by which the evanescent illuminated area, within about 200 nm in the Z axial direction from the cover glass, and about 400 $\mu$m$^2$ in the XY-axial direction at $60\times$ (i.e. using a 60-folds objective lens), is formed.
Next an example of optical systems to obtain evanescent illumination using the prism 22 as described above, followed by detecting fluorescence excited by it, is shown in FIG. 3. Such optical systems comprises laser source 31 to apply evanescent illumination to a specimen, light path 32a through which laser beam emitted from said laser source 31 passes, illuminating system 33 to irradiate the specimen with evanescent illumination generated from refraction of a laser beam passing through said light path 32a and then total reflection of said laser beam at an inner interface in light path 32, (which contains, for example, a prism to refract said laser beam and a glass plate as a light path to totally reflect a laser beam refracted with said prism), and sample 34 to be excited with evanescent illumination generated by said illumination system.
An example of such illumination systems is shown in FIG. 4. A laser beam emitted from laser source 41, passing through light path 40a, reaches to the prism 42, thereby the laser beam is refracted to direct to cover glass 44. Said directed laser beam passes through cover glass 44 with repeating total reflection at the inner interface of the glass, and reaches sample 43 as evanescent waves generated at total reflection surface. If there is a fluorescent substance in the evanescent field on sample 43, the fluorescent substance would be excited to generate fluorescence. The fluorescence generated in the evanescent field on sample 43 is collected by the optical collector 45, and detected by fluorescence detector 49 while passing through light path 40b.
In addition, in FIG. 4, fluorescence collected by the optical collector 44 is reflected, for example, by dichroic mirror 46 when entering it into light path 40b, pass through pinhole 47 and lens 48 and then is detected by fluorescence detector 49.
In this case, conventional means enabling to collect light, such as an objective lens and fiber optics, may be used for the optical collector 45. Furthermore, any light path 40 in this example may comprise a mirror and a prism which allows the alteration of the traveling direction of light passing through, may comprise some means such as a lens and a pinhole, and may comprise a filter giving any interference to a laser beam. In addition, the optical collector 45 and a part of light path 40b may be comprised in a microscope. While two detectors 49, i.e. 49a and 49b, are comprised in the example shown in FIG. 4, actually the number of detectors in the system is not limited to this.

(2) Example of evanescent illumination using an objective lens

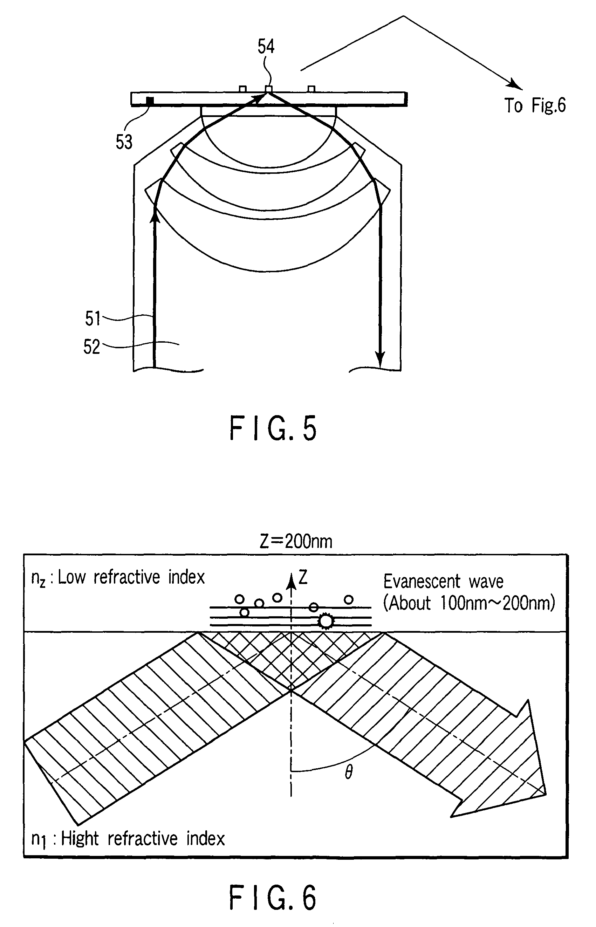

An example of illumination systems generating evanescent illumination using an objective lens is illustrated in FIG. 5. In this illumination system, laser beam 51, which is applied via a microscope, passes through objective lens 52, which has numerical aperture (i.e. NA) 1.4 or more, and reaches to the inner interface of cover glass 53, which supports sample 54, proximal to the sample, where laser beam 51 is totally reflected and enters objective lens 62 again.

Preferably a microscope used in this system is an inverted microscope. Using an inverted microscope allows the reflecting side of an objective lens to be free, enabling observation combined with a micromanipulator, application of stimuli to cells and the optical system using differential interference contrast (i.e. DIC).

In this system, any objective lens having numerical aperture 1.4 or more may be used. The examples of such lenses may include APO 100 × / NA 1.65 apochromat lens (ex. APO 100 × OHR, manufactured by Olympus) and Plan Apo × 60 NA 1.4 TIRFM (manufactured by Olympus). Numerical aperture mentioned above is a suitable value to occur total reflection to irradiate living cells with evanescent illumination. Specifically, when living cells are used as a specimen, the refractive index at the cells would be about 1.33 to 1.38. Thus, it is required to emit with high numerical aperture, 1.38 or more, in order to generate total reflection (Table 1).

Table 1

| | Total reflection angle and the maximum angle of an objective lens | | | |
|---|---|---|---|---|
| | $n_1$ | $n_2$ | Total reflection angle A1 (NA) | The maximum angle A2 (NA) |
| NA 1.4 | Immersion oil 1.515 | Cells 1.38 | 65.63 (1.38) | 65.53 (1.40) |
| NA 1.65 | Immersion oil 1.78 | Cells 1.38 | 50.83 (1.38) | 67.97 (1.65) |

In addition, the condition to give total reflection is shown as the following formula (1), which is illustrated in a schematic diagram of FIG. 6.

$$\theta \geqq \sin^{-1} ( n_2 / n_1 ), n_1 > n_2 \ldots (1),$$

wherein $n_1$ is the refractive index of an objective lens, $n_2$ is the refractive index of a specimen and $\theta$ is an angle.

Also the condition described as the formula below is required in order to apply evanescent illumination using an objective lens.

NA = n sinθ......(2), wherein NA is numerical aperture, n is the refractive index and θ is an angle.

To apply evanescent illumination, an exciting light at the objective lens is required to pass through the open cone shaped area which has higher refractive index than numerical aperture of the lens (1.38). In one aspect of the present invention as shown in FIG. 5, a high performance planapochromat lens (NA = 1.4) is used for an objective lens, which has a structure to emit the exciting light through the area with low NA (i.e. 1.4 - 1.38 = 0.02).

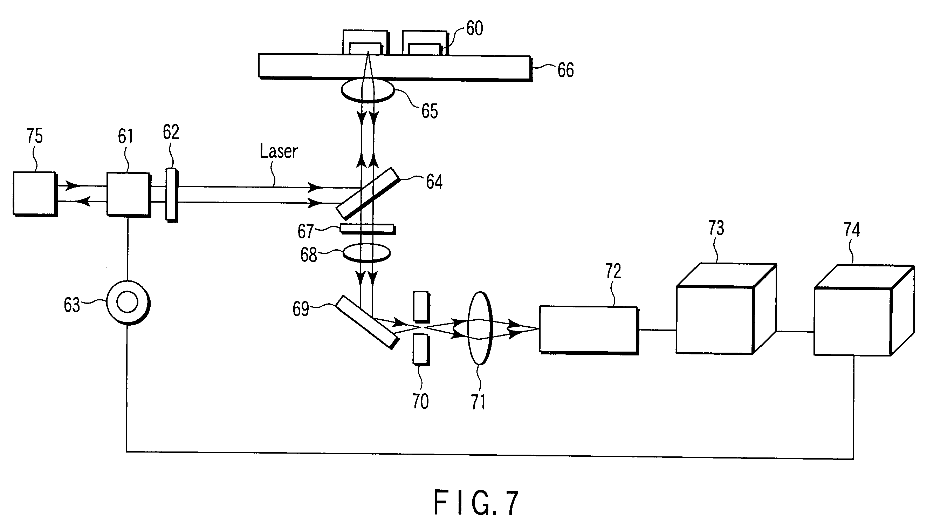

Now, referring to FIG. 7, we illustrate analyses using a fluorescence correlation spectrometer with such an objective lens.

The laser beams radiated from the laser source 61 are extinguished by the light intensity controlling means 62 such as an ND filter, and enters, by way of the dichroic mirror 64, a portion in the objective lens 65 defined by NA of 1.4 - 1.38. The incident laser beams are refracted by this objective lens 65, and totally reflected at an inner, sample 60 side interface of the cover glass 66 on which a sample is mounted. This total reflection surface generates an evanescent field on the cover glass 66. The generated evanescent light produces fluorescence, if the radiated sample contains fluorescent substances. The fluorescence is detected over time at a plurality of time points. That is, generated fluorescence passes through the dichroic mirror 64 to be narrowed by the pinhole 70, and reaches the detector (i.e. APD) 72. Fluorescent signal magnitude depends both on light focusing by the objective lens 65 and narrowing by the pinhole 70, however, it is preferable to provide fluorescent signals with the smallest radius as possible when FCS analyses are performed. In particular, the radius of the pinhole 70 is preferably be not more than 10 μm to allow for the detection of inward and outward movements of molecules in the radiated area.

Signals detected by APD 72 are analyzed at a predetermined duration by means of auto correlation function, and the diffusion time and the number of fluorescently labeled molecules are calculated.

The light detector 72 which detects focused fluorescence, for example, avalanche diode and the like, also transforms received optical signals into electrical signals and sends out the signal to the fluorescence intensity recording means (for example, computers etc.) 73.

The fluorescence intensity recording means 73 recording changes in fluorescence intensity records and/or analyzes transmitted fluorescence intensity data. More specifically, auto correlation function is established by this analysis of fluorescence intensity data. Alterations in auto correlation function enable detection of molecular weight increase and molecule number decrease caused by motion of fluorescent substances at a single-molecular level or detection of molecule number decrease caused by binding of fluorescent substances to specific areas. In this manner, analyses using fluorescence as a measure allows sequentially acquiring data concerning the states and behavior of a fluorescently labeled target substance including movement at a single-molecular level, molecular weight and interaction such as binding occurred with other molecules.

The present invention encompasses an apparatus for conducting FCS as described above.

In accordance with the present invention, the behavior and states of fluorescently labeled substances located near cell membranes can be grasped accurately over time by combining evanescent illumination and FCS, which has never been observable before. The present application discloses a method and an apparatus embodying above-mentioned ideas of the present invention, and the methods and apparatus as described above illustrate the embodiments of the present invention. Accordingly, the present invention shall never be restricted to the examples above, and various modifications can be made to the method and the apparatus according to the present invention without departing the idea of the present invention.

[Discussion]

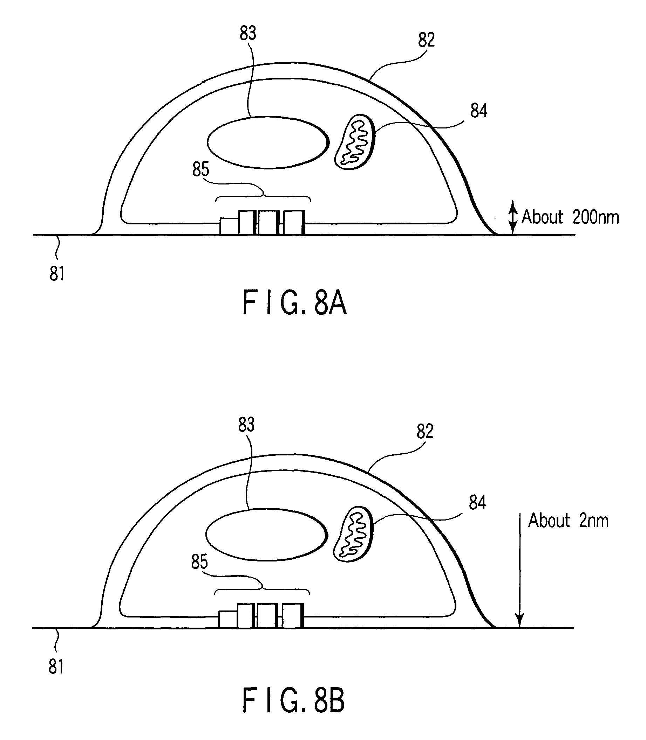

In FIGS. 8A and 8B, the difference of illuminated areas produced by evanescent illumination and confocal illumination is schematically shown. For example, when the cells 82 adhering onto the cover glass 81 are illuminated with evanescent illumination as shown FIG. 8A, the depth of illuminated area is only about 200 nm. This restricts the observed area to the proximity of membranes, thereby enabling to selectively obtain information from substances therein such as the receptor 85 (see FIG. 8A). The illumination does not reach organelles such as the nucleus 83 and the mitochondrion 84 present in cytoplasm. Confocal illumination is shown in FIG. 8B. In case of confocal illumination, areas extending to approximately 2 $\mu$m in depth are illuminated. Therefore, it is impossible to selectively observe the proximity of membranes (see FIG. 8B).

Theoretically, the area in which fluorescence can be observed by evanescent illumination is a region within about 100 nm from a total reflection surface for excitation light. Thus, when we observe cells whose individual organelles adhering to a cover glass are given fluorescent dying using evanescent illumination, we can observe cell membranes, and even a part of fluorescently labeled cytoskeletons on the cell membranes. Moreover, since the evanescent wave does not get to a nucleus, only membranes and organelles around membranes are generally radiated and observed.

When ligands are observed which bind to cell membrane receptors expressed in cells along with fluorescently labeled proteins, fluorescently labeled ligands floating in cytoplasm cannot be fluorescently observed due to inability of evanescent waves to get to the ligands in cytoplasm. However, if the fluorescently labeled ligands approach to cell membranes in order to interact with receptors on cell membranes of interest and go within an evanescent field, its fluorescence will be observed.

Also, when observation is made by evanescent illumination, the illumination does not reach organelles such as mitochondria present in cytoplasm due to shallow depth. This eliminates autofluorescence conventionally found, enabling to reduce backgrounds lower than confocal illumination does.

It is possible to elucidate the behavior and the states of various active substances present in the proximity of membranes by analysis of fluorescence excited by such evanescent illumination provided to fluorescently labeled target substances followed by FCS analysis. For example, when the behavior and states of ligands are observed which bind to membrane-embedded receptors, early diffusion time will be found if fluorescently pre-labeled ligands exist in a free form around membranes, whereas longer diffusion time will be found if they bind to the target receptors. This allows detecting the states of interaction between the ligands and their receptors sequentially at a single-molecular level. In addition, binding states such as strength of binding are also detectable based on differences in diffusion time. Moreover, researches on secretion are also possible by following the movements of granules contained in cells.

Such receptors which go through multimerization (e.g., dimerization) after their binding with ligands are also analyzable for their states. In this case, fluorescent labels will be applied to the receptors. For example, labeling can be performed by either directly labeling receptor molecules using fluorescent dyes or by expressing fluorescent substances along with the expression of receptor membrane proteins through molecular biological integration of fluorescent proteins into genes. For example, in case fluorescent labels are applied to receptors and observation is made on diffusion events in cell membranes, the receptors will show fast diffusion rate before reactions with the ligands. Upon conversion into multimers after reaction with the ligands, molecule number detected and diffusion rate will decrease.

In contrast, in case where such observation was performed by confocal illumination, it is difficult to selectively excite and observe only fluorescently labeled receptors to be detected. That is, confocal illumination excites also organelles within cytoplasm. In particular, mitochondrion is an organelle which moves on the second time scale with emitting autofluorescence. Thus mitochondria are highly likely to be detected as a signal. Mitochondria move as fast as membrane proteins do. Therefore, even if FCS is used for analysis, it is impossible to discriminate between fluorescence intensity derived from autofluorescence and that derived from fluorescent substances of interest. Illumination depth achieved by confocal illumination will lead to FCS analysis performed under conditions promiscuously involving signals not intended to be detected. It is hard to precisely reflect data to be detected in autocorrelation function curves. In other words, there is a possibility of failing to perform FCS analysis.

In contrast, FCS analysis using evanescent illumination allows selective excitation and observation of proximity of membranes. This makes it possible to focus on precise analysis of motion of membrane proteins etc. around membranes.

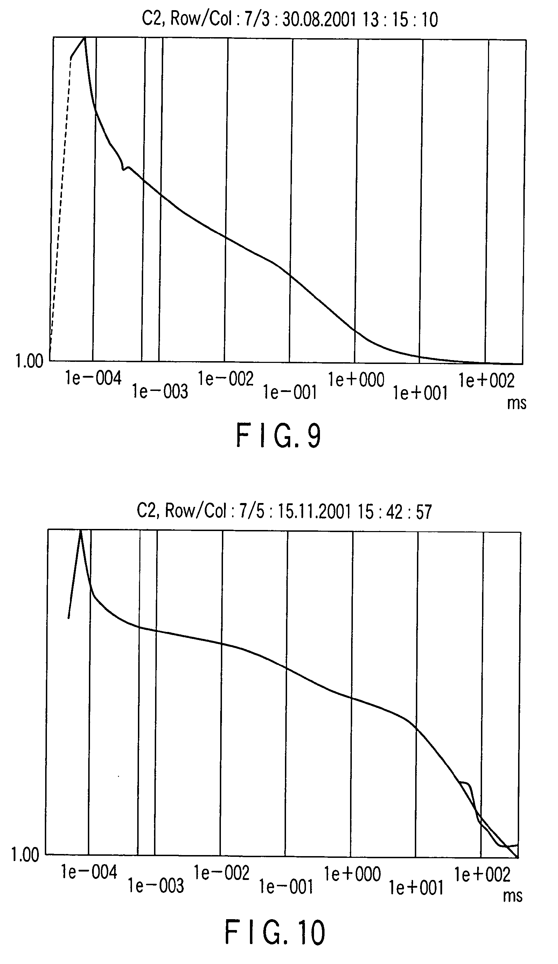

In FIG. 9, FCS analysis data on membrane receptors is shown which is obtained by evanescent illumination, whereas in FIG. 10, such data obtained by confocal illumination is shown. It will be apparent from comparison between these data that few noises are found in the FCS with evanescent illumination and the values given from the theoretical curve and measured curve are very close, whereas noises are significant in the FCS with confocal illumination, and discrepancy between the theoretical curve and measured curve is wide. This means data obtained from FCS analysis with evanescent illumination is given as more reliable diffusion time, thus reflecting motion of membrane receptors more precisely.

Moreover, evanescent illumination has a wider illumination area along the XY plane as compared to confocal illumination. For this reason, in the embodiments of the present invention, the observation area of cell membranes are confined to 10 $\mu$m or less so that it is more suitable for observation of membrane proteins. This confinement can be achieved by placing a pinhole in front of a detector.

The use of the method and apparatus in accordance with the embodiments of the present invention can reduce other noises associated with FCS analyses (e.g., triplet components, and autofluorescence generated from organelles which is normally slow in motion, but can exhibit extremely fast diffusion rate) to a minimal level. Also, fewer components included and mixed in a measurement system by auto correlation function allow more precise FCS analysis to be performed.

In addition, effects on data caused by damages upon detection can be reduced to a minimal level, because, in the embodiments of the present invention, evanescent illumination is used which can minimize damages of cells radiated in a sample. This enables to obtain desired data more precisely.

Therefore, in accordance with the present invention, fluorescence intensity per one molecule will be calculated in FCS analysis in a more reliable manner.

In addition, according to the present invention, the following analyses can be conducted. Since generated fluorescence intensity could vary depending on environments such as cytoplasm, cell membranes and extracellular spaces in which fluorescently labeled ligands are present, one can estimate in what solvent environment a particular ligand is present through the use of measurements of fluorescence intensity per one molecule. For example, while ligands present in cytoplasm and extracellular spaces will give lower fluorescence intensity, those present in solvents with small polarity such as cell membranes will give higher fluorescence intensity.

Not only when a specimen is cells, but when a specimen is solvent system, one can use cover glass interfaces as exemplified by a narrow space formed on the cover glass shown in FIG. 2 when a cover glass was mounted. For the analysis of Brownian motion of particles emitting fluorescence in a liquid located at such glass cover interfaces, evanescent illumination allows analyzing fluctuation of particles having an average particle diameter of less than 100 nm.

Furthermore, by immobilizing biological macromolecules (DNA and proteins etc.) or peptides on the particles with an average particle diameter of less than 100 nm, adding molecules interacting with the immobilized molecules for their interaction, performing FCS analysis, and calculating diffusion time, it will be possible to confirm whether the molecules interact with the immobilized molecules or not. When analyzing a reaction between particles immobilized with molecules and the molecules through fluctuation, it is preferable to make the change in molecular size before and after the reaction larger. This is because a change in diffusion time will depend on a molecular radius to the third power. In this case, in order to give a larger change in molecular weight upon a reaction with molecules, smaller particles/molecules should preferably be used as supporting particles for immobilization and molecules to be immobilized, whereas larger molecules should preferably be used for the molecules interacting with the molecules to be immobilized. Accordingly, the change will be more highlighted by using particles with a radius as small as possible. More particularly, unless the average diameter is less than 100 nm, preferably not more than 80 nm, more preferably not more than 50 nm within areas in evanescent light, it will be difficult to obtain analyzable results. On the contrary, for analyses using DNA reactions, the average particle diameter should preferably be not less than 5 nm, particularly not less than 10 nm, because higher S/N ratio could be achieved by choosing the average particle diameter significantly larger than DNA molecules.

The present invention, as described above, provides a method and an apparatus to analyze molecular behavior and states at interface areas with a high S/N ratio. The present invention also provides a method and an apparatus enabling analyses around cells with accuracy and low damage.

All references cited herein are incorporated by reference in their entireties.

It is to be understood that additional benefits and variations will readily be made by those who skilled in the art. Therefore, the present invention in its broader aspects should not be restricted to specific details and representative embodiments shown and described herein. Accordingly, various modifications could be made without departing from the spirit and scope of the generic invention that is only limited by appended claims and equivalents thereof.

**Claims**

1. A molecular fluorescence analysis method for analyzing a state of a target substance, said method comprising:

   (1) providing the target substance in a specimen with a fluorescent labeling substance;
   (2) detecting, simultaneously with or subsequently to the step (1), fluorescent signals generated in the specimen over time at a plurality of time points, while applying evanescent illumination on the specimen;
   (3) analyzing a change in single-molecular behavior and/or state of the target substance based on a change in the fluorescent signals obtained from observation in the step (2), thereby analyzing the state of the target substance.

2. The method for analyzing a state of a target substance according to claim 1, **characterized in that** the observation in the step (2) is made by way of a microscope.

3. The method for analyzing a state of a target substance according to claim 1, **characterized in that** a fluorescence correlation spectrometer is used to detection the fluorescent signals over time at a plurality of time points in the step (2).

4. The method for analyzing a state of a target substance according to claim 1, **characterized in that** the target substance is bioactive molecules present in the vicinity of a cell membrane, and the specimen is adhesive sells.

5. The method for analyzing a state of a target substance according to claim 1, **characterized in that**:

   the specimen is prepared by adhesion of the adhesive cells onto a cover glass;
   the microscope is an inverted microscope; and
   the application of the evanescent illumination is achieved by placing a prism on a surface of the cover glass onto which the adhesive cells has been adhered, and radiating laser beams on the prism to render total reflection of the laser beams onto a boundary surface located in the cover glass.

6. The method for analyzing a state of a target substance according to claim 1, **characterized in that**:

   the specimen is prepared by adhesion of the adhesive cells onto a cover glass;
   the microscope is an inverted microscope; and
   the application of the evanescent illumination is achieved by using an objective lens having a numerical aperture of 1.4 or more for the inverted microscope, and radiating excitation light through the objective lens onto a boundary surface near the specimen located inside the cover glass.

7. A fluorescence correlation spectrometer comprising:

   (1) a light source to radiate laser beams;
   (2) a radiation system to radiate evanescent waves to the specimen to be detected, wherein the radiation system is connected to the light source via a light path and forms the evanescent waves by rendering total reflection of the laser beams radiated from the light source onto a boundary surface near a sample in a cover plate on which the sample is mounted
   (3) a light detector to detect fluorescent signals generated through excitation produced by the evanescent waves that are formed by the radiation system.

8. The fluorescence correlation spectrometer according to claim 7, **characterized in that** the radiation system is an objective lens having a numerical aperture of 1.4 or more.

FIG. 1

FIG. 2

FIG. 3

FIG. 4

54

53

To Fig.6

51
52

# FIG. 5

Z=200nm

$n_z$ : Low refractive index

Z

Evanescent wave
(About 100nm~200nm)

θ

$n_1$ : Hight refractive index

# FIG. 6

FIG.7

83
82
84
85
81
About 200nm

F I G. 8A

83
82
84
85
81
About 2nm

F I G. 8B

C2, Row/Col : 7/3 : 30.08.2001 13 : 15 : 10

F I G. 9

C2, Row/Col : 7/5 : 15.11.2001 15 : 42 : 57

F I G. 10

# EP 1 617 204 A1

## INTERNATIONAL SEARCH REPORT

International application No.

PCT/JP03/05190

### A. CLASSIFICATION OF SUBJECT MATTER
Int.Cl⁷ G01N21/64

According to International Patent Classification (IPC) or to both national classification and IPC

### B. FIELDS SEARCHED
Minimum documentation searched (classification system followed by classification symbols)
Int.Cl⁷ G01N21/00-21/83

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
PATOLIS

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-253240 A (Gen Com Co.),<br>10 September, 2002 (10.09.02),<br>Full text<br>(Family: none) | 1-3<br>4-8 |
| Y | JP 10-90169 A (Laboratory of Molecular Biophotonics),<br>10 April, 1998 (10.04.98),<br>Full text<br>(Family: none) | 4 |
| Y | JP 2002-98907 A (Olympus Optical Co., Ltd.),<br>05 April, 2002 (05.04.02),<br>Full text<br>(Family: none) | 5,6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 July, 2003 (08.07.03) | 22 July, 2003 (22.07.03) |

| Name and mailing address of the ISA/<br>Japanese Patent Office | Authorized officer |
|---|---|
| Facsimile No. | Telephone No. |

Form PCT/ISA/210 (second sheet) (July 1998)

14

**INTERNATIONAL SEARCH REPORT**

International application No.

PCT/JP03/05190

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-29330 A   (Sharp Corp.),<br>02 February, 1996 (02.02.96),<br>Full text<br>(Family: none) | 5,6 |
| Y | JP 2002-236258 A  (Olympus Optical Co., Ltd.),<br>23 August, 2002 (23.08.02),<br>Full text<br>(Family: none) | 5,6,8 |
| Y | JP 2002-71567 A  (I.S.S (U.S.A) Inc.),<br>08 March, 2002 (08.03.02),<br>Full text<br>& EP 1174706 A | 3,7,8 |
| Y | JP 2001-272346 A  (Olympus Optical Co., Ltd.),<br>05 October, 2001 (05.10.01),<br>Full text<br>(Family: none) | 3,7,8 |

Form PCT/ISA/210 (continuation of second sheet) (July 1998)